# EUROPEAN PATENT APPLICATION

(11) **EP 2 498 406 A2**
(43) Date of publication of application: **12.09.2012**
(21) Application number: 11190725.9
(22) Date of filing: 25.11.2011
(51) Int. Cl.: H04B 1/04

(54) **Digital wireless transmitter and system thereof**

(30) Priority: 10.03.2011 TW 100204232
(71) Applicant: ITE Tech. Inc, Hsinchu (TW)
(72) Inventor: Wang, Chien-Fa, 112 Taipei City (TW); Lee, Yu-Min, 106 Taipei City (TW)
(74) Representative: Becker Kurig Straus

(57) **Abstract**

A digital wireless transmitter is disclosed. The digital wireless transmitter includes an interface, used to receive an audio signal and/or a video signal, the digital wireless transmitter is pluggable into an electronic device via the interface; a digital modulator, coupled to the interface, the digital modulator is used to modulate the audio signal and/or the video signal into a digital television signal; and a RF front end circuit, coupled to the digital modulator, the RF front end circuit is used to transforms the digital television signal to a RF signal on a predetermined band.

## Description

### Field of the Invention:

The invention relates to a wireless transmitter and the system thereof, and more particularly to a wireless transmitter used to remotely display audio and/or video and the system thereof.

### Background of the Invention:

If someone wants to wirelessly transmit a screen from one device to another, such as from a laptop to a mobile phone or a remote television set, he/she may choose WiFi or UWB transmitter which is available for sale now. However, if the screen is chosen to be displayed on a home television set, it can't be because a home television set usually does not equip a WiFi or UWB receiver. As such, not only the WiFi or UWB transmitter but also the receiver should be bought together. That is really a big cost.

As WiFi transmission technology is widely used on many electronic devices, the channels are too busy to transmit data quickly, so video and/or audio may not be displayed smoothly on the home television set.

Moreover, UWB transmitter and receiver are very expensive because super high frequency element is used. The transmission distance is another issue for UWB transmitter.

### Brief Summary of the Invention:

Thus, the invention discloses a digital wireless transmitter and the system thereof. Users may receive audios and/or videos transmitted from the digital wireless transmitter by just using their own home television sets or set top boxes.

One object of the invention is to provide a digital wireless transmitter, including an interface, used to receive an audio signal and/or a video signal, the digital wireless transmitter is pluggable into an electronic device via the interface; a digital modulator, coupled to the interface, the digital modulator is used to modulate the audio signal and/or the video signal into a digital television signal; and a RF front end circuit, coupled to the digital modulator, the RF front end circuit is used to transform the digital television signal to a RF signal on a predetermined band.

Another object of the invention is to provide a digital wireless transmitter pluggable into an electronic device, including an audio interface, used to receive an audio signal; a video interface, used to receive a video signal; an audio encoder, coupled to the audio interface, the audio encoder is used to encode the audio signal and generate a encoded audio signal; a video encoder, coupled to the video interface, the video encoder is used to encode the video signal and generate a encoded video signal; a multiplexer, coupled to the audio encoder and the video encoder, the multiplexer is used to merge the encoded audio signal and the encoded video signal and generate a multiplexed signal; a digital modulator, coupled to the multiplexer, the digital modulator is used to modulate the multiplexed signal into a digital television signal; a RF front end circuit, coupled to the digital modulator, the RF front end circuit is used to transform the digital television signal to a RF signal on a predetermined band; and an antenna, coupled to the RF front end circuit, the antenna is used to radiate the RF signal on the predetermined band.

Still another object of the invention is to provide a digital wireless system, including: an audio/video source, used to provide an audio signal and a video signal; a digital wireless transmitter, including: an interlace, used to receive the audio signal and the video signal, the digital wireless transmitter is pluggable into an electronic device via the interface; a digital modulator, coupled to the interface, the digital modulator is used to modulate the audio signal and the video signal into a digital television signal; and a RF front end circuit, coupled to the digital modulator, the RF front end circuit is used to transform the digital television signal to a RF signal on a predetermined band; and a digital television set, used to receive the RF signal on the predetermined band.

### Brief Description of Drawings:

Fig. 1 is the first embodiment of the digital wireless system.

Fig.2 is the second embodiment of the digital wireless system.

Fig.3 is the third embodiment of the digital wireless system.

Fig.4 is the fourth embodiment of the digital wireless system.

### Detailed Description:

The digital television system prevails over the traditional analog television system because of anti-noise ability. Many countries put much effort to develop their own digital television system recently, such as Advanced Television System Committee (ATSC) standard for pan-American; Digital Video Broadcasting - Terrestrial (DVB-T) standard for Euros; Integrate Service Digital Broadcasting - Terrestrial (ISDB-T) standard for Japan; and Digital Multimedia Broadcast - Terrestrial/Handheld (DMB-TH) standard for China.

The invention focuses on a digital wireless transmitter and the system thereof. An audio and/or video signal can be transmitted to home televisions or set top boxes and displayed remotely.

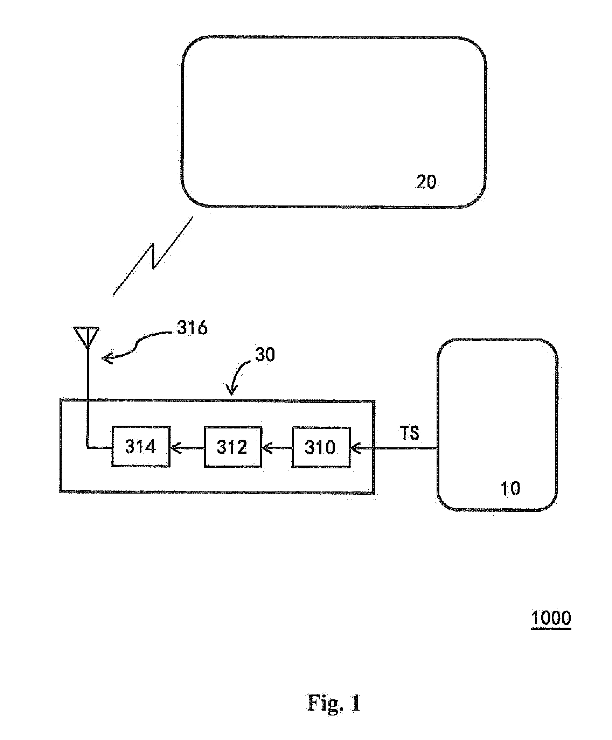

Fig.1 illustrates a first embodiment of the invention. Please refer to Fig.1 which depicts a digital wireless system 1000. The digital wireless system 1000 includes a computer 10, a digital television set 20 and a digital wireless transmitter 30. The digital wireless transmitter 30 is a peripheral device which includes an interface 310, a digital modulator 312, a RF front end circuit 314 and an antenna 316,

The computer 10 may be desktop PC, laptop, netbook, tablet PC, digital camera (DC) or digital video (DV). The digital wireless transmitter 30 couples to the computer 10 via the interface 310 and receives an audio signal and/or a video signal from the computer 10. For example, if the computer 10 is equipped with an USB port (not shown in the Fig.1), the interface 310 may be designed to have a USB connector and a USB control chip; if the computer 10 is equipped with an 1394 port (not shown in the Fig.1), the interface 310 may be designed to have a 1394 connector and a 1394 control chip; is the computer 10 is equipped with an SDIO port (not shown in the Fig.1), the interface 310 may be designed to have a SDIO connector and a SDIO control chip; if the computer 10 is equipped with an PCI/PCI-e port (not shown in the Fig.1), the interface 310 may be designed to have a PCI/PCI-e connector and a PCI/PCI-e control chip; and if the computer 10 is equipped with an CardBus/ExpressCard port (not shown in the Fig.1), the interface 310 may be designed to have a CardBus/ExpressCard connector and a CardBus/ExpressCard control chip. After the digital wireless transmitter 30 is plugged into the port of the computer 10, the computer 10 provides a transport stream (TS) signal containing the audio signal and/or the video signal to the digital modulator 312. The digital modulator 312 modulates the audio signal and/or video signal into a digital television signal. The RF front end circuit 314 transforms the digital television signal to a RF signal on a predetermined band. And then, the RF signal is radiated via the antenna 316. One skilled in the art would know the audio signal and the video signal can be recovered by a tuner, demodulator and decoder though these are not shown in the Fig.1.

As the description above, the digital modulator 312 modulates the audio signal and/or the video signal into a digital television signal. For example, if the digital television set 20 adopts ATSC standard, the digital modulator 312 modulates the audio signal and/or the video signal into a 8 Vestigial Side Band (8VSB) signal whose bandwidth is 6MHz; if the digital television set 20 adopts DVB-T standard, the digital modulator 312 modulates the audio signal and/or the video signal into a Orthogonal Frequency Division Multiplexing (OFDM) signal whose bandwidth is 6, 7 or 8MHz; if the digital television set 20 adopts ISDB-T standard, the digital modulator 312 modulates the audio signal and/or the video signal into a OFDM signal whose bandwidth is 6MHz; and if the digital television set 20 adopts DMB-T/H standard, the digital modulator 312 modulates the audio signal and/or the video signal into a Time Domain Synchronous Orhogonal Frequency Division Multiplexing (TDS-OFDM) signal whose bandwidth is 8MHz.

It should be noted that the first embodiment omits the descriptions about converting the audio signal and/or video signal to the transport stream (TS) signal by the computer 10. However, one skilled in the art would know the audio signal and/or video signal must be converted to a MPEG2 or H.264 stream signal before being modulated.

Moreover, it should be noted that though the first embodiment is illustrated based on a digital television set 20, it can be applied to an analog television set or a project with a set top box as well.

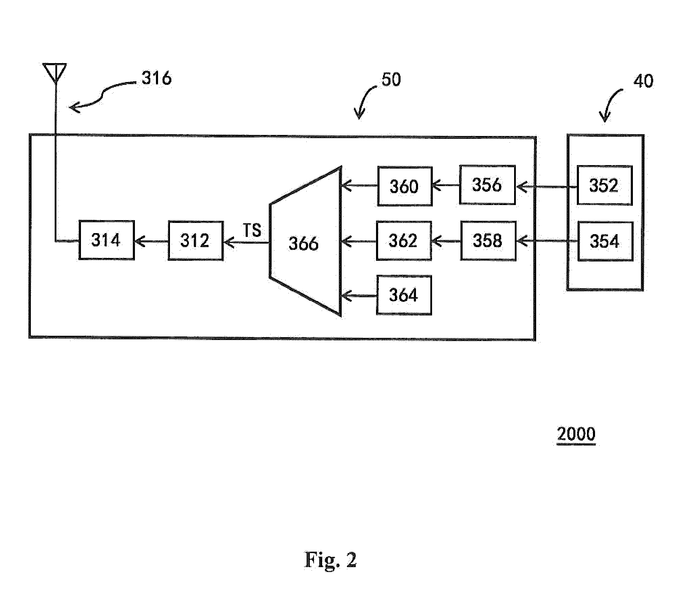

Next, Fig.2 illustrates a second embodiment of the invention. Please refer to Fig.2 which depicts a digital wireless system 2000. The digital wireless system 2000 includes an audio/video source 40 and a digital wireless transmitter 50. The audio/video source 40 includes an audio source 352 and a video source 354. The digital wireless transmitter 50 includes an audio interface 356, a video interface 358, an audio encoder 360, a video encoder 362, an information-adding element 364, a multiplexer 366, a digital modulator 312, a RF front end circuit 314 and an antenna 316.

The audio/video source 40 is a blue ray DVD player, a surveillance device, a fixed camera, a handheld camera, a nanny camera, a digital camera, a desktop PC, a laptop, a netbook, a multimedia player, a gamer, a smart phone, a tablet PC or an e-book reader. The audio source and the video source output raw data containing an audio signal and a video signal. The digital wireless transmitter 50 couples to the audio/video source and receives the audio signal and the video signal via the audio interface 352 and the video interface 354. For example, if the audio/video source 40 is equipped with a VGA port and an audio-out port (not shown in the Fig.2), the audio interface 352 and the video interface 354 may be designed to have a VGA connector, an audio connector, and a corresponding audio/video control chip; if the audio/video source 40 is equipped with a CCIR-601/CCIR-656/DVI/HDMI port and an audio-out port (not shown in the Fig.2), the audio interface 352 and the video interface 354 may be designed to have a CCIR-601/CCIR-656/DVI/HDMI connector, an audio connector, and a corresponding audio/video control chip; and if the audio/video source 40 is equipped with a composite/S-video/component port and an audio-out port (not shown in the Fig.2), the audio interface 352 and the video interface 354 may be designed to have a composite/S-video/component connector, an audio connector, and a corresponding audio/video control chip.

After the digital wireless transmitter 50 is plugged into the audio/video source 40, an audio signal sent from the audio/video source 40 is encoded by the audio encoder 360 and a video signal sent from the audio/video source 40 is encoded by the video encoder 362, and then both of them are transferred to the multiplexer 366. The information-adding element may also input a service information (SI) and a program specific information (PSI) to the multiplexer 366.

It should be noted that the second embodiment omits the descriptions about analog-digital converting issue. However, one skilled in the art would know an audio signal and/or a video signal should be converted to be digital before being encoded if the audio and/or the video signal is analog.

The multiplexer 366 merges the encoded audio signal, the encoded video signal and the information wanted to be added. The merged signal, i.e. a transport stream (TS) signal, is transferred to the digital modulator 312. The digital modulator 312 modulates the merged signal into a digital television signal. The RF front end circuit 314 transforms the digital television signal to a RF signal on a predetermined band. And then, the RF signal is radiated via the antenna 316.

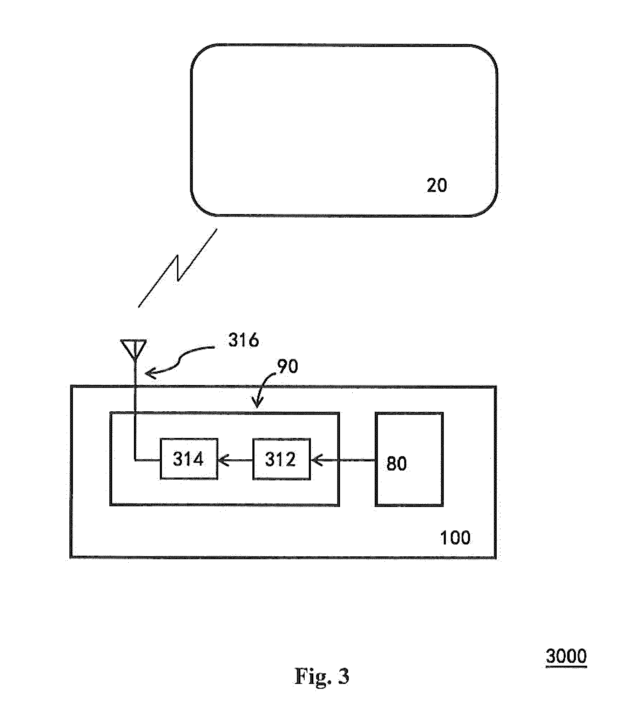

Fig.3 illustrates a third embodiment of the invention. Please refer to Fig.3 which depicts a digital wireless system 3000. The digital wireless system 3000 includes a digital wireless transmitter 100 and a digital television set 20. The digital wireless transmitter 100 includes an audio/video source 80 and a digital wireless transmission element 90. The digital wireless transmission element 90 includes a digital modulator 312, a RF front end circuit 314 and an antenna 316.

The digital wireless transmitter 100 may be a desktop PC, laptop, netbook, tablet PC, digital camera (DC), digital video (DV), blue ray DVD player, multimedia player, gamer, feature phone, smart phone, e-book reader or digital television repeater. A transport stream (TS) signal containing an audio signal and/or a video signal sent from the audio/video source 80 is transferred to the digital modulator 312. The digital modulator 312 modulates the transport stream (TS) signal into a digital television signal. The RF front end circuit 314 transforms the digital television signal to a RF signal on a predetermined band. And then, the RF signal is radiated via the antenna 316. The digital television set 20 receives the RF signal radiated from the digital wireless transmitter 90, and then the audio signal and the video signal can be recovered by a tuner, demodulator and decoder though these are not shown in the Fig.3.

It should be noted that the third embodiment omits the descriptions about converting the audio signal and/or video signal to the transport stream (TS) signal by the computer 10. However, one skilled in the art would know the audio signal and/or video signal must be converted to a MPEG2 or H.264 stream signal before being modulated.

Moreover, it should be noted that though the third embodiment is illustrated based on a digital television set 20, it can be applied to an analog television set or a project with a set top box as well.

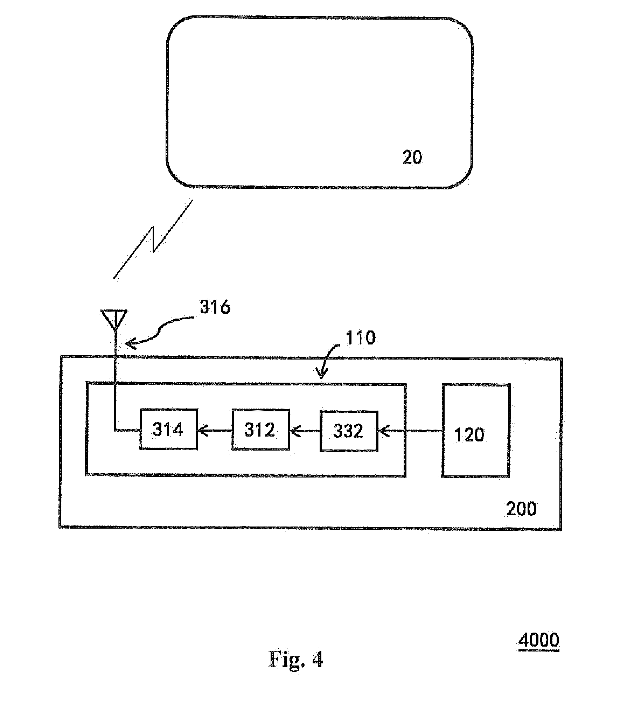

Fig.4 illustrates a fourth embodiment of the invention. Please refer to Fig.4 which depicts a digital wireless system 4000. The digital wireless system 4000 includes a digital wireless transmitter 200 and a digital television set 20. The digital wireless transmitter 200 includes an audio/video source 120 and a digital wireless transmission element 110. The digital wireless transmission element 110 includes an audio/video encoder 332, a digital modulator 312, a RF front end circuit 314 and an antenna 316.

The digital wireless transmitter 200 may be a desktop PC, laptop, netbook, tablet PC, digital camera (DC), digital video (DV), blue ray DVD player, multimedia player, gamer, feature phone, smart phone or e-book reader. An audio signal and/or a video signal sent from the audio/video source 120 are transferred to the audio/video encoder 332. The audio/video encoder 332 encodes the audio signal and/or video signal into a MPEG2 or H.264 formal and generates a transport stream (TS) signal. The transport stream (TS) signal is then transferred to the digital modulator 312. The digital modulator 312 modulates the transport stream (TS) signal into an ATSC, DVB-T, ISDB-T or DMB-TH television signal. The RF front end circuit 314 transforms the ATSC, DVB-T, ISDB-T or DMB-TH television signal to a RF signal on a predetermined band. And then, the RF signal is radiated via the antenna 316. The digital television set 20 receives the RF signal radiated from the digital wireless transmitter 110, and then the audio signal and the video signal can be recovered by a tuner, demodulator and decoder though these are not shown in the Fig.4.

The details of the audio/video encoder 332 can be found in the second embodiment and is omitted here.

Besides, it should be noted that though the fourth embodiment is illustrated based on a digital television set 20, it can be applied to an analog television set or a project with a set top box as well.

Based on the descriptions above, the embodiments may have a lot of applications, such as audio/video sharing, brief reports meeting, surveillance monitoring, babies monitoring, elders monitoring, wireless doorbell, and so on.

Although the present invention has been described with reference to the above embodiments, it will be apparent to one of the ordinary skill in the art that modifications to the described embodiment may be made without departing from the spirit of the invention. Accordingly, the scope of the invention will be defined by the attached claims not by the above detailed descriptions.

## Claims

1. A digital wireless transmitter (30), comprising:
an interface (310), used to receive an audio signal and/or a video signal, the digital wireless transmitter (30) is pluggable into an electronic device (10) via the interface (310);
a digital modulator (312), coupled to the interface (310), the digital modulator (312) is used to modulate the audio signal and/or the video signal into a digital television signal; and
a RF front end circuit (314), coupled to the digital modulator (312), the RF front end circuit (314) is used to transform the digital television signal to a RF signal on a predetermined band.

2. A digital wireless transmitter (50) pluggable into an electronic device, comprising:
an audio interface (356), used to receive an audio signal;
a video interface (358), used to receive a video signal;
an audio encoder (360), coupled to the audio interface (356), the audio encoder is used to encode the audio signal and generate a encoded audio signal;
a video encoder (362), coupled to the video interface (358), the video encoder is used to encode the video signal and generate a encoded video signal;
a multiplexer (366), coupled to the audio encoder (360) and the video encoder (362), the multiplexer (366) is used to merge the encoded audio signal and the encoded video signal and generate a multiplexed signal;
a digital modulator (312), coupled to the multiplexer (366), the digital modulator (312) is used to modulate the multiplexed signal into a digital television signal;
a RF front end circuit (314), coupled to the digital modulator (312), the RF front end circuit (314) is used to transform the digital television signal to a RF signal on a predetermined band; and
an antenna (316), coupled to the RF front end circuit (314), the antenna (316) is used to radiate the RF signal on the predetermined band.

3. The digital wireless transmitter of claim 2, further comprising:
an information-adding element (364), coupled to the multiplexer (366), the information-adding element (364) is used to transmit a service information and program specific information to the multiplexer (366).

4. A digital wireless system (1000), comprising:
an audio/video source (10), used to provide an audio signal and a video signal;
a digital wireless transmitter (30), comprising:
an interface (310), used to receive the audio signal and the video signal, the digital wireless transmitter (30) is pluggable into the audio/video source (10) via the interface;
a digital modulator (312), coupled to the interface (310), the digital modulator (312) is used to modulate the audio signal and the video signal into a digital television signal; and
a RF front end circuit (314), coupled to the digital modulator (312), the RF front end circuit (314) is used to transform the digital television signal to a RF signal on a predetermined band; and
a digital television set (20), used to receive the RF signal on the predetermined band.

5. A digital wireless system (2000), comprising:
an audio/video source (40), used to provide an audio signal and a video signal;
a digital wireless transmitter (50), pluggable into the audio/video source (40), comprising:
an audio interface (356), used to receive the audio signal;
a video interface (358), used to receive the video signal;
an audio encoder (360), coupled to the audio interface (356), the audio encoder (360) is used to encode the audio signal and generate a encoded audio signal;
a video encoder (362), coupled to the video interface (358), the video encoder (362) is used to encode the video signal and generate a encoded video signal;
a multiplexer (366), coupled to the audio encoder (360) and the video encoder (362), the multiplexer (366) is used to merge the encoded audio signal and the encoded video signal and generate a multiplexed signal;
a digital modulator (312), coupled to the multiplexer (366), the digital modulator (312) is used to modulate the multiplexed signal into a digital television signal;
a RF front end circuit (314), coupled to the digital modulator (312), the RF front end circuit (314) is used to transform the digital television signal to a RF signal on a predetermined band; and
an antenna (316), coupled to the RF front end circuit (314), the antenna (316) is used to radiate the RF signal on the predetermined band; and
a digital television set (20), used to receive the RF signal on the predetermined band.

6. The digital wireless system of claim 5, further comprising:
an information-adding clement (364), coupled to the multiplexer (366), the information-adding element (364) is used to transmit a service information and program specific information to the multiplexer (366).

7. A digital wireless transmitter (100), comprising:
an audio/video source (80), used to provide an audio signal and a video signal; and
a digital wireless transmission element (90), coupled to the audio/video source (80), comprising:
a digital modulator (312), used to receive and modulate the audio signal and the video signal into a digital television signal; and
a RF front end circuit (314), coupled to the digital modulator (312), the RF front end circuit (314) is used to transform the digital television signal to a RF signal on a predetermined band; and
an antenna (316), coupled to the RF front end circuit (314), the antenna (316) is used to radiate the RF signal on the predetermined band.
